**Europäisches Patentamt**

**European Patent Office**

**Office européen des brevets**

(19)

(11) Veröffentlichungsnummer: **0 157 947**
**B1**

(12) # EUROPÄISCHE PATENTSCHRIFT

(45) Veröffentlichungstag der Patentschrift:
24.06.87

(51) Int. Cl.⁴: **B 66 F 3/35, B 29 D 22/00**

(21) Anmeldenummer: **84116290.2**

(22) Anmeldetag: **24.12.84**

(54) Hebekissen aus heissvulkanisiertem Gummimaterial und in Rechteckform.

(30) Priorität: **28.02.84 DE 8406021 U**

(43) Veröffentlichungstag der Anmeldung:
**16.10.85 Patentblatt 85/42**

(45) Bekanntmachung des Hinweises auf die Patenterteilung:
**24.06.87 Patentblatt 87/26**

(84) Benannte Vertragsstaaten:
**AT DE FR GB IT NL SE**

(56) Entgegenhaltungen:
**EP - A - 0 040 578**
**AU - B - 453 143**
**FR - A - 2 305 381**
**GB - A - 1 169 023**
**GB - A - 2 036 655**
**US - A - 4 036 472**
**US - A - 4 067 544**
**US - A - 4 143 854**

(73) Patentinhaber: **Vetter, Manfred, Burg Langendorf,**
**D-5352 Zülpich (DE)**

(72) Erfinder: **Vetter, Manfred, Burg Langendorf,**
**D-5352 Zülpich (DE)**

(74) Vertreter: **Bauer, Wulf, Dr., Wolfgang-Müller-Strasse 12,**
**D-5000 Köln 51 (Marienburg) (DE)**

## Beschreibung

Die Erfindung bezieht sich auf ein Hebekissen nach dem Oberbegriff des Patentanspruchs 1.

Bei dem aus der US-PS 4 372 533 & EP-A-0 040 578 bekannten Hebekissen dieser Art sind, wie an sich aus den US-Patentschriften 4 067 544 und 4 143 854 bekannt ist, die Zuschnitte der ersten und zweiten Lage so lang gewählt, dass sich ihre umgeschlagenen Bereiche jeweils überlappen. Bei dem Hebekissen nach der US-PS 4 372 533 ist diese Überlappung so weit getrieben, dass sie grösser als 75% der Rechteckfläche des Hebekissens ist. Das cordarmierte Gummiflachmaterial ist ähnlich dem in der Reifenindustrie benutzten, bahnförmigen Gummimaterial. Es wird durch ein Gewebe armiert. Lediglich eine Webrichtung (Kette) besteht jedoch aus Armierungscorden, die andere Webrichtung ist aus wesentlich weniger reissfesten Fäden erstellt. Dieses Armierungsgewebe ist in ein zunächst unvulkanisiertes Gummimaterial eingebettet.

Bei der Herstellung des Hebekissens, die in einer Heissvulkanisier-Presse erfolgt, werden die noch unvulkanisierte Blase und die noch unvulkanisierten beiden Lagen wie oben beschrieben zusammengestellt und in die Presse eingelegt. Erst durch diesen Heissvulkanisiervorgang verbinden sich die überlappenden Bereiche der Blase zu einem luftdichten Ganzen; zugleich gehen die Berührungsflächen zwischen der Aussenseite der Blase und der Innenfläche der ersten Lage sowie der Aussenfläche der ersten Lage und der Innenfläche der zweiten Lage eine innige Verbindung ein. Hierbei muss jedoch sorgfältig darauf geachtet werden, dass diese Verbindung über die gesamte Fläche des Kissens erfolgt. Insbesondere muss sichergestellt sein, dass sich weder zwischen der Blase und der ersten Lage noch zwischen der ersten und der zweiten Lage Luftkammern oder -blasen befinden. Bei den hohen Belastungen, denen die Hebekissen im praktischen Betrieb ausgesetzt sind, würden eingeschlossene Luftblasen komprimiert werden und die miteinander verbundenen Flächen zumindest teilweise voneinander trennen, das Kissen also aufspalten. Lufteinschlüsse müssen daher bei der Herstellung des Hebekissens und insbesondere vor dem Heissvulkanisierschritt sorgfältig vermieden werden.

Bei dem Hebekissen nach der US-PS 4 372 533 überlappen sich die Zuschnitte der ersten und zweiten Lage jeweils, wie bereits beschrieben wurde. An den Endbereichen einer derartigen Überlappung ändert sich die Dicke der Kissenfläche sprunghaft. An den beiden quer zur jeweiligen Armierungsrichtung verlaufenden Seiten dieser Zuschnitte tritt somit die Gefahr auf, dass sich schmale, längliche Luftkammern bilden, die zu dem beschriebenen Aufreissen oder Aufplatzen Anlass geben können. Dem wird bei dem vorbekannten Hebekissen nach der US-PS 4 372 533 zwar dadurch entgegengewirkt, dass schmale, nicht näher bezeichnete oder beschriebene Streifen eingelegt werden, die offensichtlich vermeiden sollen, dass ein abrupter Übergang im Bereich der Flächen des Kissens selbst stattfindet. Sie sind so an die Seiten der beiden Lagen angelegt, dass sie die Überlappungsbereiche jeweils bis in den Übergang zu den Kanten des Hebekissens verlängern. Hierdurch sind jedoch vier zusätzliche Streifen erforderlich, die bei der Herstellung des Kissens sorgfältig eingelegt und positioniert werden müssen. Auch bei sorgfältigem Arbeiten ist jedoch nicht auszuschliessen, dass sich Spalte bilden bzw. Spalte freibleiben zwischen den Zusatzstreifen und den Seiten der ersten bzw. zweiten Lage. Derartige Spalte sind schon in den Figuren der US-PS 4 372 533 gezeigt, die Zusatzstreifen stossen nicht stumpfbündig an die Seiten der Zuschnitte.

Bei dem bekannten Hebekissen ist somit nachteilig, dass bei der Herstellung insgesamt vier zusätzliche Streifen benötigt werden, die speziell und sorgfältig eingelegt werden müssen. Wie beschrieben, erreicht man trotz dieses hohen Aufwandes keine zuverlässige Sicherheit dahingehend, dass sich in den Wänden des Kissens keine Lufteinschlüsse befinden.

Hiervon ausgehend, ist es nun Aufgabe der Erfindung, die Nachteile des bekannten Hebekissens zu vermeiden und dieses dahingehend zu verbessern, dass die einzelnen Schichten, aus denen es aufgebaut ist, so miteinander verbunden sind, dass praktisch keine Lufteinschlüsse auftreten können.

Diese Aufgabe wird, ausgehend von den Merkmalen des Hebekissens der eingangs genannten Art, dadurch gelöst, dass die erste Lage aus dem genannten ersten Zuschnitt und einem zusätzlichen zweiten Zuschnitt besteht, wobei die quer zur Armierungsrichtung verlaufenden Endkanten der umgeschlagenen Bereiche des ersten Zuschnitts sich ohne Überlappung in geringer Entfernung voneinander, vorzugsweise stumpf aneinander stossend, befinden und auf der Innenseite des aus dem ersten Zuschnitt gebildeten Schlauches vom zweiten Zuschnitt überdeckt sind, der mit Abstand zu den quer zur Armierungsrichtung verlaufenden Hebekissenkanten endet, und dass die zweite Lage ebenfalls aus dem genannten ersten Zuschnitt und einem zusätzlichen, zweiten Zuschnitt besteht, wobei die quer zur Armierungsrichtung verlaufenden Endkanten der umgeschlagenen Bereiche des zweiten Zuschnitts sich ohne Überlappung in geringer Entfernung voneinander, vorzugsweise stumpf aneinander stossend, befinden und auf der Innenseite des aus dem ersten Zuschnitt gebildeten Schlauches vom zweiten Zuschnitt überdeckt sind, der mit Abstand zu den quer zur Armierungsrichtung verlaufenden Hebekissenkanten endet.

Bei diesem Hebekissen wird erreicht, dass jede Kissenfläche vollflächig durch drei Armierungsschichten verstärkt ist. Im Gegensatz zu dem vorbekannten Hebekissen, bei dem jedenfalls im Bereich der Zusatzstreifen lediglich eine zweifache Armierung gegeben ist, was dort zu einer erhöhten Bruch- oder Reissgefahr führt, ist das erfindungsgemässe Hebekissen somit in seinen beiden Flächen vollständig und gleichmässig armiert.

Weiterhin wird auf Grund des geringen Abstandes, vorzugsweise des stumpfen Aneinanderstossens der Endkanten der umgeschlagenen Bereiche der jeweiligen ersten Zuschnitte weitgehend ein Luftspalt ausgeschlossen. Bei der Fertigung kann so verfahren werden, dass der Schnitt am bereits partiell aufgebauten Kissen selbst erfolgt, wobei sich die beiden Endbereiche der umgeschlagenen Bereiche zunächst überlappen. Unabhängig vom Verlauf des Schnittes wird dann eine exakte Anpassung der Endkanten erzielt und das Verbleiben eines Luftspaltes sicher ausgeschlossen.

Durch die zusätzlichen zweiten Lagen wird der Verbindungsbereich der Endkanten des ersten Zuschnitts vorteilhaft überbrückt, so dass sich die dort vorhandene Unterbrechung der Armierung nicht negativ auswirken kann. Vorzugsweise befindet sich der Übergangsbereich zwischen der Endkanten der umgeschlagenen Bereiche auf einer Mittellinie des Kissens, um im wesentlichen symmetrische Belastungsverhältnisse zu erzielen und grösstmögliche Überlappungsflächen zwischen jedem der beiden umgeschlagenen Bereiche des ersten Zuschnitts und dem zweiten Zuschnitt zu erhalten.

Der zweite Zuschnitt befindet sich jeweils nur in einer Kissenfläche. Im Gegensatz zum ersten Zuschnitt verläuft er nicht kontinuierlich durch eine Kante hindurch. Insgesamt ergibt dieser Aufbau eine präzise Schichtstruktur ohne Sprungstellen unterschiedlicher Dicke des Kissenmaterials in dessen Fläche. Materialdicke Sprünge befinden sich ausschliesslich im Kantenbereich. Dort werden sie jedoch ausreichend ausgeglichen und führen nicht zu eingeschlossenen Luftvolumina.

Bei dem erfindungsgemässen Hebekissen sind die Kissenflächen — wie beschrieben — durchgehend vollständig gleichmässig dreifach armiert, die Kantenbereiche haben dagegen eine einfache Armierung. In vorzugsweiser Weiterbildung der Erfindung wird vorgeschlagen, die Armierung der Kantenbereiche durch schmale, U-förmig gebogene Lappen zu verbessern, deren Cordfäden parallel zur Armierungsrichtung des ersten Zuschnitts der Lage verläuft, auf die der Lappen jeweils aufgesetzt ist. Hierdurch wird die Ausreissfestigkeit in Belastungsrichtung erhöht.

In bevorzugter Weiterbildung der Erfindung ist die Blase aus Rohkautschuk, insbesondere aus einem einstückigen Zuschnitt gefertigt. Die Blase wird dabei nicht vorvulkanisiert, sondern erst in der Heissvulkanisier-Presse zugleich mit den anderen Vulkanisationsvorgängen gefertigt. Ein Trennmittel, insbesondere eine Trennfolie vermeidet, dass die beiden Flächen des Kissens beim Vulkanisieren eine Verbindung eingehen. Der vorzugsweise einstückige Zuschnitt hat im wesentlichen eine Rechteckform, wobei die Länge für eine Überlappung grösser ist als das Zweifache der Rechteckseite. Seine Breite ist der Länge der anderen Rechteckseite angepasst und er hat zusätzlich schmale, einander gegenüberliegende Umschlaglappen an den Längsseiten, deren Länge der Länge der einen Rechteckseite entspricht. Bei der Herstellung der Blase werden diese schmalen Umschlaglappen zunächst nach innen eingefaltet; anschliessend werden die eine Kissenfläche überragenden Teile aufeinander geklappt. Insgesamt entsteht eine Blase, die bis zum Rand gefüllt werden kann. Damit treten Randverluste nicht auf.

In bevorzugter Weiterbildung befindet sich ein Schutzstreifen, beispielsweise aus einem Gewebe, auf der Innenseite der Stahlcordarmierungen der Kanten des Hebekissens. Hierdurch wird vermieden, dass sich die Blase gegen die Armierungen presst, gegebenenfalls durch die Armierungen hindurchdrückt.

In besonders bevorzugter Ausbildung der Erfindung wird entweder ein Gumminippel mit der Blase verbunden und einvulkanisiert, in den ein Metallnippel eingesetzt und mittels einer Schlauchklemme oder dergleichen befestigt werden kann, oder ein Metallnippel wird permanent eingeklebt. Er hat hierzu auf seinem zylindrischen Mantel axiale und radiale Rillen, die einen besseren Formschluss sichern. Bei einem auswechselbaren Metallnippel besteht der Vorteil, dass bei Beschädigung des Gewindes des Metallnippels dieser problemlos ausgetauscht werden kann, während bei permanent eingeklebtem Metallnippel zwar grundsätzlich die Möglichkeit besteht, ein Gewinde nachzuschneiden, ein derartiges Nacharbeiten aber begrenzt ist, so dass häufig bei Beschädigung des Metallnippels das gesamte Hebekissen weggeworfen werden muss. Schliesslich ist in bevorzugter Ausbildung der Erfindung die Deckschicht des Hebekissens aus einem relativ fliessfähigen, vor dem Vulkanisieren in der Presse unvulkanisierten Material gefertigt. Auf Grund der gegenüber dem Stand der Technik höheren Fliessfähigkeit werden eventuell noch verbliebene Hohlräume ausgefüllt, weiterhin wird der Übergangsbereich zu den Kanten hin problemlos geglättet und ausgefüllt.

Weitere vorteilhafte Ausbildungen ergeben sich aus den übrigen Ansprüchen sowie der nun folgenden Beschreibung eines nicht einschränkend zu verstehenden Ausführungsbeispiels, das unter Bezugnahme auf die Zeichnung näher erläutert wird. In dieser zeigen:

Fig. 1 eine perspektivische Darstellung einer Blase, einer ersten und einer zweiten Lage zur Verdeutlichung des Aufbaus, nicht aber der einzelnen Schritte beim Zusammensetzen des erfindungsgemässen Kissens,

Fig. 2 eine perspektivische Darstellung eines einstückigen Zuschnitts für eine Blase,

Fig. 3 eine perspektivische Darstellung eines Gumminippels, und

Fig. 4 eine perspektivische Darstellung eines Metallnippels.

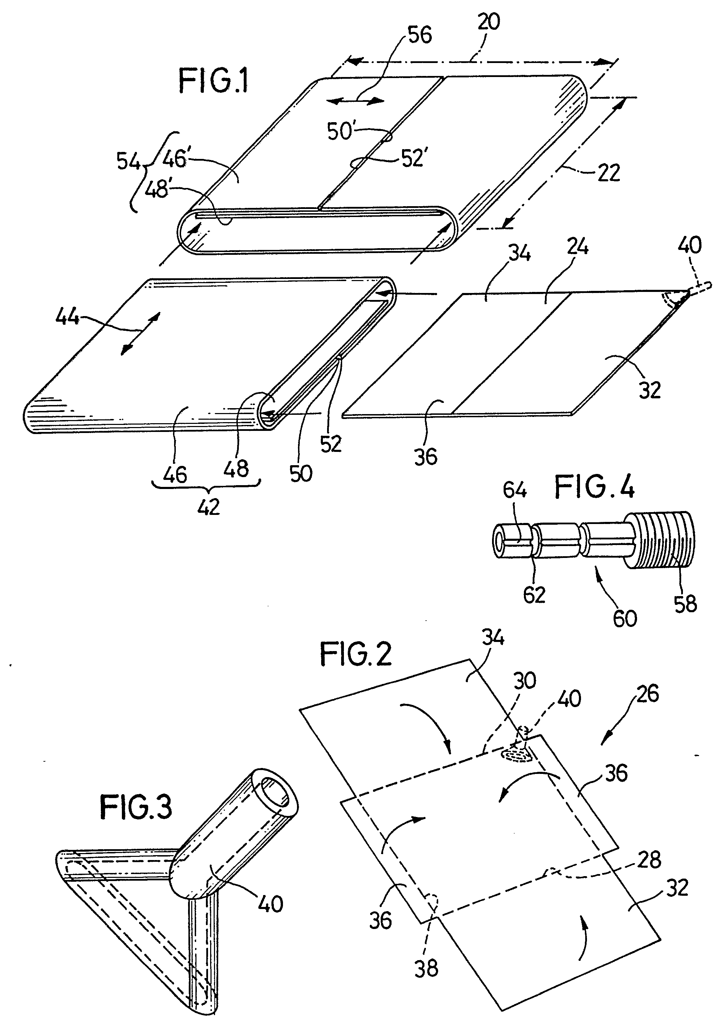

In Figur 1 ist prinzipiell dargestellt, wie ein Hebekissen zusammengesetzt ist. Allerdings sind Deckschichten weggelassen. Das fertige Hebekissen ist in einem einzigen Vulkanisierungsschritt in einer Presse mittels Heissvulkanisation hergestellt. Es ist aus bahnförmigem, vor dem Heissvulkanisieren unvulkanisiertem Gummimaterial aufgebaut und hat eine Rechteckform, im gezeigten Ausführungsbeispiel eine quadratische Form, die bestimmt ist durch eine erste und eine zweite Rechteckseite 20, 22, die die Kissenfläche definieren.

In den Figuren 1 und 2 ist die das Kisseninnere bildende, luft- bzw. wasserdichte Blase 24 gezeigt. Sie ist aus einem im wesentlichen rechteckförmigen Zuschnitt 26 aus einem unvulkanisierten Bahnmaterial gefertigt. Dieser Blasenzuschnitt 26 hat eine Länge, die grösser ist als die doppelte Länge einer Rechteckseite, im Ausführungsbeispiel der ersten Rechteckseite 20. Dadurch wird erreicht, dass bei einem Falten des Blasenzuschnitts 26 um die Faltlinien 28, 30 die umgeschlagenen Bereiche 32, 34 überlappen, wobei die Überlappung typischerweise 20% der Länge der entsprechenden Rechteckseite 20 beträgt.

Der Blasenzuschnitt 26 hat im wesentlichen eine Breite, die der Länge der zweiten Rechteckseite 22 entspricht. Er hat jedoch einander exakt gegenüberliegende, mehrere Zentimeter breite Umschlaglappen 36, die sich über eine Länge erstrecken, die der Länge der ersten Rechteckseite 20 entspricht und die in unmittelbarer Nähe der Faltlinien 28, 30 auslaufen. Diese Umschlaglappen 36 werden ihrerseits um Faltlinien 38 geklappt. Vorzugsweise ist dies die erste Faltung; erst danach wird um die Faltlinien 28, 30 gefaltet. Die gebogenen Pfeile in der Figur 2 zeigen die Faltvorgänge. Vor dem Falten ist ein Nippel 40 in einen Eckbereich des Kissens eingesetzt worden. Dabei handelt es sich um einen Gumminippel, wie er in Figur 3 dargestellt ist. Ein Metallnippel ist nicht eingesetzt, kann aber permanent eingeklebt werden. Ein derartiger Metallnippel ist aus Figur 4 ersichtlich.

Die zusammengefaltete Blase 24 hat die in Figur 1 gezeigte Gestalt. Im Gegensatz zur Darstellung von Figur 1 wird nun die vorgefertigte aber noch nicht vulkanisierte Blase 24 nicht in eine erste Lage 42 eingeschoben, vielmehr wird diese erste Lage 42 erst in die gezeigte Form gefaltet, nachdem die Blase 24 aufgelegt wurde. Wie Figur 1 zeigt, setzt sich die erste Lage, deren Armierungsfäden parallel zur zweiten Rechteckseite 22 verlaufen (Armierungsrichtung 44), aus einem ersten, rechteckförmigen Zuschnitt 46 und einem zweiten, ebenfalls rechteckförmigen, jedoch kleineren Zuschnitt 48 zusammen. Bei beiden verläuft die nicht dargestellte Cordarmierung in der Armierungsrichtung 44. Beide Zuschnitte haben jeweils eine Breite, die der Länge der ersten Rechteckseite 20 entspricht. Der erste Zuschnitt 46 hat eine Länge, die so gewählt ist, dass die Endkanten 50, 52 exakt und ohne Luftspalt stumpf aneinander stossen, wobei dieser stumpfe Stoss sich in der Mitte des Kissens befindet. Der zweite Zuschnitt 48 befindet sich unmittelbar unterhalb dieses soeben beschriebenen Bereiches mit stumpfen Stoss. Seine Länge entspricht im wesentlichen der Länge der zweiten Rechteckseite 22.

Die zweite Lage 54 ist grundsätzlich ebenso aufgebaut wie die erste Lage 42, jedoch sind alle Richtungen und Abmessungen um 90° versetzt. Weiterhin befindet sich der Bereich des stumpfen Aneinanderstossens der Endkanten 50', 52' in bezug auf die erste Lage 42 in der anderen Kissenfläche. Dadurch hat jede Kissenfläche eine Linie unterbrochener Armierung, jedenfalls befinden sich nicht in ein- und derselben Kissenfläche zwei Linien mit stumpfen Stoss. Die Armierungsrichtung 56 der zweiten Lage 54 verläuft rechtwinklig zur Armierungsrichtung 44 und wie die letztere in der Ebene der Kissenflächen.

Bei der Herstellung werden die einzelnen Schichten schrittweise aufeinander gelegt und jeweils sorgfältig angerollt, um irgendwelche Lufteinschlüsse sorgsam zu vermeiden. Diese würden beim Füllen und Leeren des Hebekissens mitatmen und den Ausgangspunkt für weitere Trennung bzw. Abspaltung bilden.

Die ersten Zuschnitte 46, 46' der beiden Lagen 42, 54 werden vorteilhafterweise im Bereich der Kanten des Hebekissens um einen Radius abgekantet. Als besonders vorteilhaft hat sich hier ein Blech erwiesen. Ein Abkanten ist insbesondere bei starker Armierung notwendig.

Besonders typisch für das erfindungsgemässe Hebekissen ist, dass es in einem Arbeitsgang vulkanisiert wird. Die Blase 24 wird nicht zunächst vorgefertigt, beispielsweise vorvulkanisiert. Sie wird im Rohzustand zusammengefaltet und erst während des einzigen Vulkanisierungsschrittes zu einer echten Blase verbunden.

In einen Eckenbereich des Hebekissens ist, wie aus Figur 2 ersichtlich wird, ein diagonal verlaufender Gumminippel 40 eingesetzt, der in Figur 3 näher dargestellt ist. Bei diesem Teil handelt es sich um zwei gleichschenklig rechtwinklige Dreiecksflächen, die an ihren Katheten miteinander verbunden sind und im Bereich der Spitze des rechtwinkligen Dreiecks in eine schlauchartige Tülle übergehen, in der sich ein Durchgangsloch befindet. Dieser Gumminippel 40 ist im Gegensatz zu den bisher besprochenen Teilen des Hebekissens ein vulkanisiertes Teil, da sichergestellt sein muss, dass er beim Heissvulkanisieren in der Presse seine Form beibehält.

Die dreieckförmigen Bereiche sichern eine grossflächige Verbindung des Gumminippels 40 mit den anliegenden Randbereichen des Kissens. Hierdurch ist der Nippel 40 ausreichend ausreissfest. In das Schlauchstück des Nippels 40 kann ein Metallnippel eingesetzt und beispielsweise mittels einer Schlauchklemme befestigt werden. Ein derartiger Metallnippel ist in Figur 4 dargestellt. Er besteht im wesentlichen aus einem zylindrischen Röhrchen, das an einem Ende ein Gewinde 58 trägt. An seinem dem Kissen zugewandten Endbereich hat der Metallnippel 60 sowohl radial als auch axial verlaufende Rillen 62, 64, die ein Herausziehen bzw. ein Verdrehen des Metallnippels 60 behindern. Dies ist insbesondere für eine permanente Befestigung des Metallnippels 60 vorteilhaft, kann aber auch bei austauschbaren Metallnippeln 60 benutzt werden.

Alternativ kann die Blase 24 auch aus zwei einzelnen Zuschnitten aufgebaut werden, beispielsweise einem Zuschnitt, der randseitige Umschlagbereiche hat, und einem zweiten Zuschnitt, dessen Abmessungen dem Rechteck aus erster Rechteckseite 20 und zweiter Rechteckseite 22 entsprechen.

**Patentansprüche**

1. Hebekissen aus in einer Presse heissvulkanisiertem, bahnförmigem, vor dem Heissvulkanisieren unvulkanisiertem Gummimaterial und in Rechteckform, die durch eine erste und eine zweite Rechteckseite (20, 22) bestimmt ist, das aufweist:
— eine innenliegende, luftdichte Blase (24), die mit einem in einer Ecke angeordneten, von aussen zugänglichen Nippel verbunden ist,
— eine ausserhalb dieser Blase (24) befindliche erste Lage aus einem cord-, insbesondere stahlcordarmierten Gummiflachmaterial, dessen Armierungsrichtung (44) parallel zu der zweiten Rechteckseite (22) verläuft, wobei diese Lage (42) einen rechteckförmigen Zuschnitt aufweist,
  a. dessen Breite im wesentlichen der Länge der ersten Rechteckseite (20) entspricht,
  b. dessen Länge nicht wesentlich kleiner ist als die zweifache Länge der zweiten Rechteckseite (22), und
  c. der um die parallel zur ersten Rechteckseite (20) verlaufenden Kanten des Hebekissens gebogen ist, und
— eine ausserhalb dieser ersten Lage (42) befindliche, zweite Lage (54) ebenfalls aus einem cord-, insbesondere stahlcordarmierten Material, dessen Armierungsrichtung (56) parallel zur ersten Rechteckseite (20) verläuft, wobei diese Lage einen rechteckförmigen Zuschnitt (46') aufweist,
  a. dessen Breite im wesentlichen der Länge der zweiten Rechteckseite (22) entspricht,
  b. dessen Länge nicht wesentlich kleiner ist als das Zweifache der Länge der ersten Rechteckseite (20) und
  c. der um die parallel zur zweiten Rechteckseite (22) verlaufenden Kanten gebogen ist,
  d. wobei sich die umgeschlagenen Bereiche dieser zweiten Lage (54) auf einer anderen Seitenfläche des Hebekissens befinden als die umgeschlagenen Bereiche der ersten Lage (42),
dadurch gekennzeichnet, dass die erste Lage (42) aus dem genannten ersten Zuschnitt (46) und einem zusätzlichen zweiten Zuschnitt (48) besteht, wobei die quer zur Armierungsrichtung (44) verlaufenden Endkanten (50, 52) der umgeschlagenen Bereiche des ersten Zuschnitts (46) sich ohne Überlappung in geringer Entfernung voneinander, vorzugsweise stumpf aneinander stossend, befinden und auf der Innenseite des aus dem ersten Zuschnitt (46) gebildeten Schlauches vom zweiten Zuschnitt (48) überdeckt sind, der mit Abstand zu den quer zur Armierungsrichtung (44) verlaufenden Hebekissenkanten endet, und dass die zweite Lage (54) ebenfalls aus dem genannten ersten Zuschnitt (46') und einem zusätzlichen, zweiten Zuschnitt (48') besteht, wobei die quer zur Armierungsrichtung (56) verlaufenden Endkanten (50', 52') der umgeschlagenen Bereiche des zweiten Zuschnitts (48') sich ohne Überlappung in geringer Entfernung voneinander, vorzugsweise stumpf aneinander stossend, befinden und auf der Innenseite des aus dem ersten Zuschnitt (46') gebildeten Schlauches vom zweiten Zuschnitt (48') überdeckt sind, der mit Abstand zu den quer zur Armierungsrichtung (56) verlaufenden Hebekissenkanten endet.

2. Hebekissen nach Anspruch 1, dadurch gekennzeichnet, dass die zweiten Zuschnitte (48, 48') der beiden Lagen (42, 54) rechteckförmig und nicht grösser als die Grundfläche des Hebekissens selbst sind.

3. Hebekissen nach Anspruch 1 oder 2, dadurch gekennzeichnet, dass sich die Stosslinien an den Endkanten (50, 52, 50', 52') beider Lagen (42, 54) auf einer Mittellinie des Hebekissens befinden.

4. Hebekissen nach einem der Ansprüche 1 bis 3, dadurch gekennzeichnet, dass die Blase (24) aus bahnförmigen Rohkautschukmaterial mit zwischenliegendem Trennmittel, insbesondere einer Trennfolie, gefaltet und gemeinsam mit den beiden Lagen (42, 54) heissvulkanisiert ist.

5. Hebekissen nach Anspruch 4, gekennzeichnet durch einen im wesentlichen rechteckförmigen Blasenzuschnitt (26), dessen Länge für eine Überlappung grösser ist als das Zweifache einer Rechteckseite (20; 22), dessen Breite der Länge der anderen Rechteckseite (22; 20) angepasst ist und der zusätzlich schmale, einander gegenüberliegende Umschlaglappen (36) an den Längsseiten hat, deren Länge der Länge der einen rechteckseite (20; 22) entspricht.

6. Hebekissen nach einem der Ansprüche 1 bis 5, dadurch gekennzeichnet, dass der Nippel (40) ein Gumminippel ist, in dem ein Metallnippel (60) lösbar eingesetzt und im Gumminippel (40) vorzugsweise mittels einer Schlauchklemme gehalten ist.

7. Hebekissen nach einem der Ansprüche 1 bis 6, gekennzeichnet durch Schutzstreifen im Bereich der Kanten des Kissens, insbesondere Gewebestreifen, die sich zwischen den Kantenbereichen der ersten Zuschnitte (46, 46') und der Blase (24) befinden.

8. Hebekissen nach einem der Ansprüche 1 bis 7, gekennzeichnet durch einen Metallnippel (60) mit radialen und axialen Rillen (62, 64) auf seiner äusseren Mantelfläche.

9. Hebekissen nach einem der Ansprüche 1 bis 8, gekennzeichnet durch eine Deckschicht aus einem relativ fliessfähigen, vor dem Vulkanisieren in der Presse unvulkanisierten Material.


**Revendications**

1. Coussin de levage constitué d'un matériau caoutchouté en forme de feuille, vulcanisé à chaud dans une presse mais non vulcanisé avant la vulcanisation à chaud et se présentant sous la forme d'un rectangle qui est défini par un premier côté (20) et un second côté (22), qui comporte:
— une vessie (24) placée à l'intérieur, étanche à l'air et qui reliée à une tubulure disposée dans un angle et accessible de l'extérieur,

— une première couche, située à l'extérieur de cette vessie (24), formée d'une matière plane caoutchoutée renforcée par des câbles, notamment des câbles en acier et dont la direction de renforcement (44) est orientée parallèlement au second côté (22) du rectangle, ladite couche (42) comportant un flan de forme rectangulaire,

    a. dont la largeur correspond sensiblement à la longueur du premier côté (20) du rectangle,

    b. dont la longueur n'est pas sensiblement plus petite que le double de la longueur du second côté (22) du rectangle, et

    c. qui est plié autour des bords du coussin de levage qui sont orientés parallèlement au premier côté (20) du rectangle, et

— une seconde couche (54), située à l'extérieur de cette première couche (42), également formée d'un matériau renforcé par des câbles, notamment des câbles en acier et dont la direction de renforcement (56) est orientée parallèlement au premier côté (20) du rectangle, cette couche comportant un flan (46') de forme rectangulaire,

    a. dont la largeur correspond sensiblement à la longueur du second côté (22) du rectangle,

    b. dont la longueur n'est pas sensiblement inférieure au double de la longueur du premier côté (20) du rectangle, et

    c. qui est plié autour des bords orientés parallèlement au second côté (22) du rectangle,

    d. les zones rabattues de cette seconde couche (54) étant situées sur une autre surface latérale du coussin de levage par rapport aux zones rabattues de la première couche 42,

caractérisé en ce que la première couche (42) se compose du premier flan (46) précité et d'un second flan (48) additionnel, les bords extrêmes (50, 52), orientés perpendiculairement à la direction de renforcement (44), des zones rabattues du premier flan (46) étant situés, sans recouvrement, à légère distance l'un de l'autre, en venant de préférence buter l'un contre l'autre, et étant recouverts, sur le côté intérieur du tuyau souple constitué à partir du premier flan (46), par le second flan (48) qui se termine à distance des bords du coussin de levage orientés perpendiculairement à la direction de renforcement (44), et en ce que la seconde couche (54) se compose également du premier flan (46') précité et d'un second flan (48') additionnel, les bords extrêmes (50', 62') orientés perpendiculairement à la direction de renforcement (56), des zones rabattues du second flan (48') étant situés sans recouvrement à une légère distance l'un de l'autre, en venant de préférence buter l'un contre l'autre, et étant recouverts, sur le côté intérieur du tuyau souple constitué par le premier flan (46'), par le second flan (48') qui se termine à distance des bords du coussin de levage orientés perpendiculairement à la direction de renforcement (56).

2. Coussin de levage selon la revendication 1, caractérisé en ce que les second flans (48, 48') des deux couches (42, 54) ont une forme de rectangle et ne sont pas plus grands que la surface de base du coussin de levage proprement dit.

3. Coussin de levage selon la revendication 1 ou 2, caractérisé en ce que les lignes de jonction prévues sur les bords extrêmes (50, 52, 50', 52') des deux couches (42, 54) sont situées sur une ligne médiane du coussin de levage.

4. Coussin de levage selon l'une des revendications 1 à 3, caractérisé en ce que la vessie (24) constituée d'une matière en forme de feuille en caoutchouc brut est pliée avec un moyen séparateur intermédiaire, notamment une feuille de séparation, et est vulcanisée à chaud en commun avec les deux couches (42, 54).

5. Coussin de levage selon la revendication 4, caractérisé par un flan de vessie (26) sensiblement de forme rectangulaire, dont la longueur prévue pour un rabattement est plus grande que le double d'un côté (20; 22) du rectangle, dont la largeur est adaptée à la longueur de l'autre côté (22; 20) du rectangle et qui comporte additionnellement des lèvres étroites de rabattement (36) placées dans des positions mutuellement opposées sur les côtés longitudinaux et dont la longueur correspond à la longueur d'un des côtés (20; 22) du rectangle.

6. Coussin de levage selon l'une des revendications 1 à 5, caractérisé en ce que la tubulure (40) est une tubulure en caoutchouc dans laquelle est engagée de façon démontable une tubulure métallique (60) qui est maintenue dans la tubulure en caoutchouc (40) de préférence au moyen d'un collier pour tuyau souple.

7. Coussin de levage selon l'une des revendications 1 à 6, caractérisé par des bandes protectrices placées dans la zone des bords du coussin, notamment des bandes en tissu, qui sont situées entre les zones marginales du premier flan (46, 46') et de la vessie (24).

8. Coussin de levage selon l'une des revendications 1 à 7, caractérisé par une tubulure métallique (60) comportant des rainures radiales et axiales (62, 64) sur sa surface périphérique extérieure.

9. Coussin de levage selon l'une des revendications 1 à 8, caractérisé par une couche de recouvrement se composant d'une matière relativement fluable qui n'est pas vulcanisée avant la vulcanisation dans la presse.

## Claims

1. Lift pad made of a rubber material which is hot-vulcanized in a press, weblike and unvulcanized before performing the step of hot-vulcanisation, said pad having a rectangular shape defined by a first and a second side (20, 22) of a rectangle, said pad incorporates:

— and airtight envelope (24) arranged inside and connected to a connection device positioned in a corner and accessible from outside,

— a first layer (42) of a cord reinforced, especially steelcord-reinforced flat rubber material arranged outside this envelope (24), the direction of reinforcement (44) running parallel to the second side (22) of the rectangle, wherein this first layer (42) exhibits a cut of rectangular shape

    a. having a width which substantially equals the length of the first side (20) of the rectangle,

b. having a length which is not essentially shorter than the double length of the second side (22) of the rectangle, and

c. being bent around edges of the pad running parallel to the first side (20) of the rectangle, and — a second layer (54) likewise of a cord, especially steelcord reinforced material arranged outside the first layer (42), the direction of reinforcement (56) running parallel to the first side (20) of the rectangle, wherein this layer (54) exhibits a cut (56') of rectangular shape,

a. having a width which essentially equals the length of the second side (22) of the rectangle,

b. having a length which is not essentially shorter than the double length of the first side (20) of the rectangle, and

c. which is bent around edges of the pad running parallel to the second side (22) of the rectangle,

d. whereby the turned-under regions of this second layer (54) are on the other side face of the pad as the turned-under regions of the first layer (42),

characterized in that the first layer (42) consists of the said first cut (46) and an additional second cut (48), whereby the edges (50, 52) of the turned-under regions of the first cut (46) which edges (50, 52) run oblique to the direction of reinforcement (44) are very close to each other without reciprocal overlap and preferably are jump-jointed and are covered by the second cut (48) at the inside of the loop formed by the first cut (46), whereby the first cut ends in a certain distance from the edges of the pad running oblique to the direction of reinforcement (44), and in that the second layer (54) likewise consists of the said first cut (46') and an additional, second cut (48'), whereby the edges (50', 52') of the turned-under regions of the second cut (48'), which edges run oblique to the direction of reinforcement (56) are very close to each other without reciprocal overlap and preferably are jump-jointed and are covered by the second cut (48') at the inside of the loop formed by the first cut (46'), whereby the second cut (48') ends in a certain distance from the edges of the pad running oblique to the direction of reinforcement (56).

2. Lift pad as in claim 1, characterized in that the second cuts (48, 48') of both layers (42, 54) have rectangular shape and are not larger in area than the area of the lift pad itself.

3. Lift pad as in claim 1 or 2, characterized in that the lines, where the edges (50, 52; 50', 52') of both layers (42, 54) meet are on a center line of the lift pad.

4. Lift pad as in one of the claims 1 to 3, characterized in that the envelope (24) of weblike natural rubber exhibits interposed means for separation, especially a parting foil and is folded and hot-vulcanized together with the said two layers (42, 54).

5. Lift pad as in claim 4, characterized by an essentially rectangularly-shaped cut (26) for the envelope (24) having a length which is greater than the double of one side of the rectangle (20; 22), so that overlap appears, and a width equal to the length of the other side of the rectangle (22; 20), said cut (26) further exhibits slender tabs (36) facing each other and positioned at the long sides, the length of said tabs essentially equals the length of one side of the rectangle (20; 22).

6. Lift pad as in one of the claims 1 to 5, characterized in that the nipple (40) is a rubber nipple in which a metallic fitting (60) can releasably be inserted, whereby the metallic fitting (60) is fixed in the rubber nipple (40) preferably by a tube clamp.

7. Lift pad as in one of the claims 1 to 6, characterized by protecting stripes in the edge regions of the pad, especially stripes of fabric which are positioned between the edge regions of the first cuts (46, 46') and the envelope (24).

8. Lift pad as in one of the claims 1 to 7, characterized by a metallic fitting (60) having radial and axial grooves (62, 64) at its outer cylindrical surface.

9. Lift pad as in one of the claims 1 to 8, characterized by a cover layer of a relatively free-flowing material which is unvulcanized before vulcanisation in the press.

**FIG.1**

54 { 46'  48'

56    20

50'

52'

22

44

34    24    40

46  48    50    52    32

36

42

**FIG.4**

64

62    60    58

**FIG.2**    34

30    40    26

36

28

36    32

**FIG.3**    38

40